(19) Europäisches Patentamt
European Patent Office
Office européen des brevets

(11) EP 3 650 179 A1

(12) EUROPÄISCHE PATENTANMELDUNG

(43) Veröffentlichungstag:
**13.05.2020 Patentblatt 2020/20**

(21) Anmeldenummer: **19205370.0**

(22) Anmeldetag: **25.10.2019**

(51) Int Cl.:
***B25J 9/16*** *(2006.01)* ***E02F 3/43*** *(2006.01)*
***G01G 23/01*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **26.10.2018 DE 102018126809**

(71) Anmelder: **Liebherr-France SAS**
**68005 Colmar Cedex (FR)**

(72) Erfinder:
- **Sawodny, Oliver**
  **70186 Stuttgart (DE)**
- **Renner, Anton**
  **78736 Epfendorf (DE)**
- **Wind, Hannes**
  **70372 Stuttgart (DE)**

(74) Vertreter: **Laufhütte, Dieter**
**Lorenz Seidler Gossel**
**Rechtsanwälte Patentanwälte**
**Partnerschaft mbB**
**Widenmayerstraße 23**
**80538 München (DE)**

# (54) SYSTEM UND VERFAHREN ZUM BESTIMMEN DER MASSE EINER VON EINEM ARBEITSGERÄT BEWEGTEN NUTZLAST

(57) Die vorliegende Erfindung betrifft ein System zur Bestimmung der Masse einer von einem Arbeitsgerät einer Maschine bewegten Nutzlast, umfassend:
ein Hubwerkelement, das entlang eines Pfades bewegbar ist und dazu ausgelegt ist, das Arbeitsgerät zu bewegen;
ein Sensorsystem, das dazu ausgelegt ist, mehrere Maschinenzustandssignale vorzusehen, die einen Zustand der Maschine angeben;
ein Kraftsensorsystem, das dazu ausgelegt ist, ein Hubkraftsignal vorzusehen, das eine Kraft auf das Hubwerkelement angibt; und
ein Steuergerät, das dazu ausgelegt ist:
Systemparameter zur Lastbestimmung zu verwenden, die aus vorkonfigurierten CAD-Daten, vorzugsweise werkseitig vorkonfigurierten CAD-Daten, und/oder einer laufenden Kalibrierung von Systemparametern stammen;
dann, wenn unbefriedigende Ergebnisse erzielt werden, eine Kalibrierung unter Verwendung der vorkonfigurierten Parameter als Initialisierung durchzuführen;
die Kalibrierung in einem unbelasteten Zustand, d.h. mit einem leeren Arbeitsgerät, durchzuführen, wobei dann automatisch vordefinierte Anregungstrajektorien für die Maschine verwendet werden oder Anweisungen an den Bediener zum Anregen der Parameter gegeben werden;
die Systemzustände unter Verwendung der Sensoren zu protokollieren und eine Systemidentifikation dieser Informationen durchzuführen; und
eine Masse der Nutzlast auf Grundlage identifizierter und/oder vorkonfigurierter Systemparameter und Systemzustände zu bestimmen, vorzugsweise auf Grundlage einer Position, einer Geschwindigkeit, einer Beschleunigung des Hubwerkelements und/oder einer Kraft bzw. eines Drehmoments an dem Hubwerkelement.

EP 3 650 179 A1

## Beschreibung

Die vorliegende Erfindung betrifft ein System und ein Verfahren zum Bestimmen der Masse einer von einem Arbeitsgerät bewegten Nutzlast, insbesondere die von einem Bagger mit seinem Löffel aufgenommene Nutzlast.

Bei größeren Bauvorhaben ist es oftmals erforderlich, Erdmaterial auszuheben und den Aushub abzutransportieren. Hierzu wird die ausgehobene Erde auf LKWs geladen, wobei dies typischerweise mithilfe von Baggern erfolgt. Um dabei möglichst effizient vorzugehen, ist man bemüht, die mit der Erde zu beladenden LKWs bis an das Maximum ihrer zulässigen Ladefähigkeit zu beladen. Problematisch hierbei ist jedoch, dass es keinerlei Informationen über die Masse beziehungsweise das Gewicht der durch einen Bagger auf einen LKW geladenen Erde gibt, sodass die LKWs in der Regel über- oder unterladen werden. Ist der LKW überladen, muss der Bagger wieder Material vom LKW entfernen, um diesen zu entlasten und einen sicheren Betrieb des LKWs zu gewährleisten.

Vorliegend ist es also die Aufgabe der erfindungsgemäßen Lastmassenschätzung die durch die Baggerschaufel (=Löffel des Baggers) aufgenommene Lastmasse zu schätzen. Dadurch wird es möglich, LKWs mit größerer Sicherheit hinsichtlich der zu beladenden Masse sehr genau bis hin zu deren maximal zulässigen Transportgewicht zu beladen und somit ein möglichst effektives Ausheben und Abfördern des Aushubs zu gewährleisten.

Aus dem Stand der Technik sind im Wesentlichen zwei verschiedene Ansätze bekannt, die eine Lastmassenschätzung ermöglichen. Als erstes kann ein Kennfeld der Zylinderkräfte über den Arbeitsraum des Baggerarms aufgenommen werden, wobei ein erstes Kennfeld nur mit dem Werkzeug im unbelasteten Zustand und ein weiteres Kennfeld im belasteten Zustand über die Winkel des Baggerarms erstellt wird. Dabei sollte die im Baggerlöffel aufgenommene Referenzlast die maximal zulässige Masse besitzen. Die beiden Kennfelder werden bei bestimmten Bewegungen erstellt und gelten in ihrer Exaktheit dann auch nur für diese Bewegungen. Abweichende Geschwindigkeiten, Winkellagen und Beschleunigungen verfälschen das Ergebnis der Lastmassenschätzung, die dann mittels Interpolation ermittelt wird.

Die zweite Möglichkeit ist ein modellbasierter Ansatz. Dabei werden die Drehmomente an den Gelenken der Ausrüstung beziehungsweise des Baggers oder des Baggerarms über die Zylinderdrücke berechnet. Weiter werden über die Bewegungsgleichungen die theoretisch anliegenden Drehmomente ermittelt, wobei die gemessenen und die modellbasierten Drehmomente Informationen zu der Lastmasse wiedergeben.

Beispiele für den modellbasierten Ansatz finden sich in der US 7912612 B2, US 8909437 B2 oder der US 8660758.

Nachteilhaft ist, dass der vorstehend exemplarisch bezeichnete bekannte Stand der Technik für die Parameter der Bewegungsgleichungen Referenzfahrten beziehungsweise Kalibrierfahrten erfordert, die vor einer Schätzung der Lastmasse notwendig sind.

Es ist das Ziel der vorliegenden Erfindung ein verbessertes Verfahren beziehungsweise ein verbessertes System zur Lastmassenschätzung vorzusehen, das ohne Referenz- beziehungsweise ohne Kalibrierfahrten eine Schätzung der Lastmasse ermöglicht.

Dies gelingt mit dem System, das sämtliche Merkmale des Anspruchs 1 aufweist. Demnach umfasst das System zum Bestimmen der Masse einer von einem Arbeitsgerät einer Maschine bewegten Nutzlast ein Hubwerkelement, das entlang eines Pfades bewegbar ist und dazu ausgelegt ist, das Arbeitsgerät zu bewegen; ein Sensorsystem, das dazu ausgelegt ist, mehrere Maschinenzustandssignale vorzusehen, die einen Zustand der Maschine angeben; ein Kraftsensorsystem, das dazu ausgelegt ist, ein Hubkraftsignal vorzusehen, das eine Kraft auf das Hubwerkelement angibt; und ein Steuergerät, das dazu ausgelegt ist Systemparameter zur Lastbestimmung zu verwenden, die aus CAD-Daten, vorzugsweise werkseitig vorkonfigurierten CAD-Daten, und/oder einer laufenden Kalibrierung von Systemparametern stammen; dann, wenn unbefriedigende Ergebnisse erzielt werden, eine Kalibrierung unter Verwendung der vorkonfigurierten Parameter als Initialisierung durchzuführen; die Kalibrierung in einem unbelasteten Zustand, das heißt mit einem leeren Arbeitsgerät, durchzuführen, wobei dann automatisch vordefinierte Anregungstrajektorien für die Maschine verwendet werden oder Anweisungen an den Bediener zum Anregen der Parameter gegeben werden; die Systemzustände unter Verwendung der Sensoren zu Protokollieren und eine Systemidentifikation dieser Informationen durchzuführen; und eine Masse der Nutzlast auf Grundlage identifizierter und/oder vorkonfigurierter Systemparameter und Systemzustände zu bestimmen, vorzugsweise auf Grundlage einer Position, einer Geschwindigkeit, einer Beschleunigung des Hubwerkelements und/oder einer Kraft beziehungsweise eines Drehmoments an dem Hubwerkelement.

Durch die Erfindung ist es demnach nicht mehr erforderlich, vor der Schätzung der Lastmasse Kalibrierfahrten oder Initialisierungsfahrten zu machen, die bisher erforderlich waren um alle oder einen Teil der Systemparameter zu identifizieren. Die Erfindung schlägt hingegen vor, die Systemparameter mit CAD-Daten zu initialisieren, die beispielsweise werkseitig vorgegeben sein können. Nachfolgende Kalibrierungen können diese Daten als Startwerte für die Bestimmung der neuen Systemparameter verwenden.

Weiter wird vorgeschlagen, eine kontinuierliche Aktualisierung der Systemparameter über Schätzverfahren, wobei das Schätzverfahren vorzugsweise in einem vorher festgelegten Umfang wiederholt wird, d.h. eine bestimmte Anzahl von Wiederholungen durchläuft. Nach einer optionalen Fortbildung der Erfindung ist das Steuergerät ferner dazu ausgelegt, die Maschinenzustandssignale des Arbeitsgeräts zu empfangen, während das Arbeitsgerät auf einer mehrdimensionalen, vorzugsweise dreidimensionalen, Bahn bewegt wird.

Weiter vorteilhaft ist das Steuergerät dazu ausgelegt, vorkonfigurierte Systemparameter auf Grundlage von CAD-Daten zu verwenden und/oder eine Systemidentifizierungsprozedur durchzuführen und die Masse der Nutzlast zumindest teilweise auf Grundlage dieser Systemparameter zu bestimmen.

Vorzugsweise ist das Steuergerät dazu ausgelegt, die Systemparameter unter Verwendung der CAD-Daten als Initialisierung zu Rekalibrieren, und/oder die Parameter des Systems durch das Verwenden vordefinierter Trajektorien des Arbeitsgeräts automatisch zu identifizieren, und/oder die Parameter des Systems zu identifizieren, indem dem Bediener Anweisungen gegeben werden, wie das Arbeitsgerät bewegt werden soll, um die zu identifizierenden Parameter anzuregen.

Nach einer bevorzugten Ausführung des erfindungsgemäßen Systems umfasst das System ferner einen mit einem Hubwerkelement wirkverbundenen Aktuator, und umfasst darüber hinaus vorzugsweise ein Schwenkelement und ein das Hubwerkelement umfassendes Arbeitsgerätesystem, das ein Auslegerelement, ein Stielelement und das Arbeitsgerät umfasst.

Dabei kann vorgesehen sein, dass die Maschinenzustandssignale eine Winkelposition, eine Winkelgeschwindigkeit und/oder eine Winkelbeschleunigung des Schwenkelements, des Auslegerelements, des Stielelements und/oder des Arbeitsgeräts umfassen, wobei vorzugsweise die Maschinenzustandssignale mindestens ein Gieren und ein Rollen der Maschine umfassen.

Vorzugsweise beruhen die Parameter des Maschinensystems zumindest teilweise auf einer Trägheit und/oder einer Masse des Auslegers, des Stils und des Arbeitsgeräts.

Nach einer Fortbildung der Erfindung beruhen die Systemparameter zumindest teilweise auf einer Position eines Schwerpunkts des Auslegerelements, des Stielelements und des Arbeitsgeräts, wobei die Position in einem Koordinatensystem angeordnet ist, das seinen Ursprung in einem jeweils zugehörigen Drehgelenk besitzt, und wobei eine X-Achse des Koordinatensystems mit den Drehgelenken eines aktuellen und eines nachfolgenden Elements fluchtet, eine Z-Achse des Koordinatensystems mit der Drehachse des Drehgelenks eines aktuellen Elements übereinstimmt und eine Y-Achse des Koordinatensystems so gewählt ist, dass ein rechtwinkliges Koordinatensystem, vorzugsweise ein rechtshändiges Koordinatensystem entsteht. Dabei kann das Drehgelenk ein Scharniergelenk darstellen, das eine Rotation nur um eine Achse erlaubt, wie es an einem Baggerarm beispielhaft umgesetzt ist. Der Baggerarm besteht nämlich auch aus mehreren Elementen, die zueinander jeweils nur um eine Achse verschwenkt werden können.

Die Erfindung umfasst ferner ein Verfahren, insbesondere ein in einem Steuergerät implementiertes Verfahren, zum Bestimmen der Masse einer von einem Arbeitsgerät einer Maschine bewegten Nutzlast, umfassend: Verwenden von vordefinierten Systemparametern zur Lastbestimmung, die auf CAD-Daten basieren, und/oder Durchführen einer rekursiven Identifizierung der Systemparameter während Arbeitszyklen mit unbelastetem Arbeitsgerät; Bestimmen des Drehmoments am Hubwerkelement und von Arbeitsgerätzuständen zum Identifizieren der Systemparameter für die unbelastete Maschine, während das Arbeitsgerät bewegt wird; Durchführen der Systemidentifikation rekursiv oder mit einem Identifikationsverfahren für die unbelastete Maschine; Empfangen eines zweiten Satzes von belasteten Maschinenzustandssignalen, wenn das Arbeitsgerät im belasteten Zustand bewegt wird; Bestimmen eines Maschinenzustands mit belastetem Arbeitsgerät auf der Grundlage des zweiten Satzes von belasteten Maschinenzustandssignalen; Bestimmen der Drehmomente an dem Arbeitsgerät unter Verwendung der Kraft auf das Hubwerkelement; Berechnen des theoretischen Drehmoments an dem Arbeitsgerät auf der Grundlage der Systemparameter für den unbelasteten Fall; und Bestimmen einer Masse der Nutzlast, zumindest teilweise auf Grundlage der Systemparameter, der Maschinenzustände mit belastetem Arbeitsgerät und einer Hubkraft bei belastetem Arbeitsgerät. Nach einer Fortbildung des Verfahrens wird das Arbeitsgerät entlang einer dreidimensionalen Bahn bewegt, während der erste Satz an unbelasteten Maschinenzustandssignalen empfangen wird.

Zudem ist denkbar, dass eine mögliche Initialisierung der Systemparameter mit CAD-Daten für die Systemidentifikation durchgeführt wird, und/oder für die Systemparameter die vorkonfigurierten Parameter aus CAD-Daten verwendet werden.

Nach einer optionalen Modifikation der Erfindung wird ein Drehmoment an einem Drehgelenk des Hubwerkelements zumindest teilweise auf Grundlage der Hubkraft bestimmt und die Maschinensystemparameter werden zumindest teilweise auf Grundlage des ermittelten Drehmoments bestimmt, wobei in dem Verfahren vorzugsweise ein Drehmoment des belasteten Arbeitsgeräts am Drehgelenk des Hubwerkelements bestimmt wird, das zumindest teilweise auf der Hubkraft des belasteten Hubwerkelements basiert, und die Masse der Nutzlast, die zumindest teilweise auf dem Drehmoment des belasteten Arbeitsgeräts basiert, bestimmt wird; und/oder die Masse der Nutzlast zumindest teilweise anhand der Systemparameter bestimmt wird.

Ferner kann vorgesehen sein, dass die aktuelle Bewegung des Arbeitsgeräts evaluiert und die Schätzung der Lastmasse nur unter geeigneten Bedingungen angezeigt wird. So eignen sich manche Bewegungen, die eine Anregung der entsprechenden Parameter nicht mit sich bringen, nicht für das Heranziehen einer Lastmassenschätzung.

Ferner kann dabei vorgesehen sein, dass ein Schwenkelement und ein Arbeitsgerätsystem mit einem Auslegerelement, einem Stielelement und dem Arbeitsgerät vorgesehen ist, und das Arbeitsgerätesystem in unterschiedlicher Weise positioniert wird, während das Arbeitsgerät in einem unbelasteten Zustand entlang einer mehrdimensionalen, vorzugsweise dreidimensionalen, Bahn bewegt wird, wobei vorzugsweise das Arbeitsgerät die Bewegung im unbelasteten Zustand mit einer vorbestimmten Häufigkeit wiederholt und/oder die Bewegung des Arbeitsgeräts autonom ausgeführt wird, oder dem Bediener dargelegt wird, wie er das Arbeitsgerät bewegen soll.

Die Erfindung betrifft ferner eine Maschine, welche umfasst: ein Arbeitsgerät; ein Hubwerkelement, das entlang einer Bahn bewegbar ist und mit dem Arbeitsgerät wirkverbunden ist, um das Arbeitsgerät zu bewegen; ein Sensorsystem, das dazu ausgelegt ist, mehrere Maschinenzustandssignale vorzusehen, die einen Zustand der Maschine angeben; ein Kraftsensorsystem; das dazu ausgelegt ist, ein Hubkraftsignal vorzusehen, das eine Kraft auf das Hubwerkelement angibt; und ein Steuergerät, das dazu ausgelegt ist: vordefinierte Systemparameter zur Lastbestimmung zu verwenden, die auf CAD-Daten basieren, und/oder eine rekursive Identifizierung der Systemparameter vorzunehmen, während Arbeitszyklen mit unbelasteten Arbeitsgerät; das Drehmoment an dem Hubwerkelement und Arbeitsgerätzustände zum Identifizieren der Systemparameter für die unbelastete Maschine zu bestimmen, während das Arbeitsgerät bewirkt wird; die Systemidentifikation rekursiv oder mit einer Identifikationsprozedur für die unbelastete Maschine durchzuführen; einen zweiten Satz von belasteten Maschinenzustandssignalen zu empfangen, wenn das Arbeitsgerät in einem belasteten Zustand bewegt wird; einen Maschinenzustand eines belasteten Arbeitsgeräts auf Grundlage des zweiten Satzes von belasteten Maschinenzustandssignalen zu bestimmen; die Drehmomente an dem Arbeitsgerät unter Verwendung der Kraft an dem Hubwerkelement zu bestimmen; das theoretische Drehmoment am Arbeitsgerät auf Grundlage der Systemparameter für den unbelasteten Fall zu berechnen; und
eine Masse der Nutzlast zumindest teilweise auf Grundlage der Systemparameter, des Maschinenzustands des belasteten Arbeitsgeräts und der Hubkraft des belasteten Arbeitsgeräts zu bestimmen.

Die Erfindung betrifft ferner ein Verfahren, insbesondere ein in einem Steuergerät implementiertes Verfahren, zum Bestimmen von Maschinensystemparametern einer Maschine, wobei die Maschine ein Schwenkelement und ein Arbeitsgerätesystem mit einem Auslegerelement, einem Stielelement und einem Arbeitsgerät aufweist, wobei das Verfahren die Schritte umfasst: Drehen des Schwenkelements relativ zu einem Rahmenelement, vorzugsweise einem Unterwagen, während das Auslegerelement, das Stielelement und das Arbeitsgerät in einem unbelasteten Zustand gemäß einer vordefinierten Trajektorie bewegt werden; Empfangen eines Satzes unbelasteter Maschinenzustandssignale, wenn das Schwenkelement gedreht und das Auslegerelement, das Stielelement und das Arbeitsgerät im unbelasteten Zustand bewegt werden; bestimmen eines Systemmaschinenzustands auf Grundlage des Satzes der unbelasteten Maschinenzustandssignale; Bestimmen einer Hubkraft auf ein Hubwerkelement auf Grundlage eines Hubwerkskraftsignals, das erzeugt wird, wenn das Arbeitsgerät im unbelasteten Zustand bewegt wird; und Bestimmen von Maschinensystemparametern auf Grundlage des Maschinenzustands und der Hubkraft, wobei in dem Verfahren eine statische Systemidentifikation ausgeführt wird, bei der das Auslegerelement, das Stielelement und das Arbeitsgerät in einer Vielzahl von verschiedenen Positionen verweilen, und/oder das Stielelement während eines Drehens des Schwenkelements und eines Bewegens des Auslegerelements relativ zum Auslegerelement bewegt wird.

Zusammenfassend ist auszuführen, dass es der Hauptunterschied zum vorbekannten Stand der Technik ist, dass nun keine Kalibrierung notwendig ist, um die Lastschätzung auszuführen. Dabei werden nach der Erfindung zuerst die Parameter unter Rückgriff auf die Systemparameter aus CAD-Daten initialisiert. Eine Kalibrierung kann durchgeführt werden, falls die Leistung der Lastschätzung abfällt. Die vorgegebenen Systemparameter können immer noch als Startwerte für die Systemidentifikation beziehungsweise die Kalibrierung verwendet werden. Zudem kann auch eine fortlaufende Kalibrierung während eines Arbeitszyklus bei unbelastetem Arbeitsgerät erfolgen.

Vorzugsweise ist zu beachten, dass die Begriffe Maschinenzustand und Systemzustand dieselbe Bedeutung haben und äquivalent verwendet werden. Selbiges gilt für die Ausdrücke Systemparameter und Parameter, die gleichbedeutend sind.

Weitere Einzelheiten, Merkmale und Vorteile der Erfindung werden anhand der nachfolgenden Figurenbeschreibung ersichtlich. Dabei zeigen:

Fig. 1: eine schematische Darstellung eines Baggers,

Fig. 2: die definierten Koordinatensysteme in einem schematischen Bagger,

Fig. 3: ein Ablaufdiagramm der Lastmassenschätzung,

Fig. 4: ein schematisches Schaubild für die benötigten Größen einer Zylinderkompensation eines Baggerarms, und

Fig. 5: ein Schaubild zur Zylinderkompensation bei einem Koppelgelenk.

**Bewegungsgleichungen**

Um den Einfluss der Last auf das wirkende Drehmoment zu ermitteln, muss das Drehmoment aufgrund des Systems bekannt sein. Es bietet sich an, das Drehmoment vom System über ein Modell des Systems zu berechnen. Die Dynamik wird hierbei über die Bewegungsgleichungen dargestellt, die über bewährte Verfahren wie die NEWTON-EULER-Methode oder den LAGRANGEschen Gleichungen 2. Art aufgestellt werden können. Im Allgemeinen werden dabei Bewegungsgleichungen in der Form

$$\tau = \boldsymbol{D}(q)\ddot{q} + \boldsymbol{C}(q,\dot{q})\dot{q} + \boldsymbol{G}(q) \qquad (1)$$

abgeleitet, worin q die verallgemeinerten Koordinaten sind, $\tau$ das Drehmoment, ***D*** die Massenmatrix, ***C*** die Matrix der Zentrifugal- und Corioliskräfte und ***G*** der Gravitationsmomentenvektor ist. Die verallgemeinerten Koordinaten q sind in diesem Fall die Drehwinkel der einzelnen Komponenten des Baggers. Fig. 1 zeigt die schematische Darstellung des Baggers unter Betrachtung des Auslegers, des Stiels und des Löffels und der Drehung vom Oberwagen.

Der Index $i$ = 1 steht für den Oberwagen, $i$ = 2 für den Ausleger, $i$ = 3 für den Stiel und $i$ = 4 für den Löffel. Die Drehwinkel sind mit $\psi_1$ beschrieben, $J_i$ ist das $i$-te Gelenk und $\boldsymbol{a}_i$ ist der Abstand von Gelenk $i$ + 1 zu $i$. Der Schwerpunkt CoG (Center of Gravity) wird über den Radius $r_i$ und dem Winkel $\alpha_i$ im $i$-ten Koordinatensystem der jeweiligen Komponente dargestellt.

Die Koordinatensysteme sind in Fig. 2 definiert. Diese Beschreibung ist äquivalent zu einer Beschreibung der Schwerpunkte über x- und y-Koordinaten. Schlussendlich ist die Erdbeschleunigung $g$, die stationär betrachtet wird, skizziert. Stationär bedeutet, dass das dynamische Gieren, Nicken und Rollen des Baggers nicht betrachtet werden. Dies schließt jedoch nicht eine mögliche schiefe Lage des Baggers aus, welche sich im Gravitationsvektor äußert.

Die verallgemeinerten Koordinaten für das vorliegende System sind

$$q = \begin{bmatrix}\psi_1\\ \psi_2\\ \psi_3\\ \psi_4\end{bmatrix} \quad \text{mit} \quad \dot{q} = \begin{bmatrix}\dot{\psi}_1\\ \dot{\psi}_2\\ \dot{\psi}_3\\ \dot{\psi}_4\end{bmatrix}, \; \ddot{q} = \begin{bmatrix}\ddot{\psi}_1\\ \ddot{\psi}_2\\ \ddot{\psi}_3\\ \ddot{\psi}_4\end{bmatrix}. \qquad (2)$$

Die nichtlinearen Bewegungsgleichungen aus Gleichung (1) lassen sich in eine Darstellung überführen, die linear in ihren Parametern ist, siehe Gleichung (3).

$$\tau = \boldsymbol{W}(q,\dot{q},\ddot{q})\Psi \qquad (3)$$

Die Matrix $\boldsymbol{W}(q,\dot{q},\ddot{q})$ setzt sich aus dem Gravitationsmomentenvektor $G(q)$, der Matrix der Zentrifugal- und Corioliskräften $\boldsymbol{C}(q,\dot{q})$ und der Massenmatrix $D(q)$ zusammen. Der Vektor $\Psi$ enthält die Parameter des Systems wie Massen und Trägheiten der einzelnen Komponenten. Diese treten teilweise in linearen Abhängigkeiten auf. Generell lässt sich mit dieser Darstellung eine einfache Regression durchführen, um den Parametervektor $\Psi$ zu bestimmen. Hierbei wird ***W*** als Regressor und $\Psi$ als Regressand bezeichnet.

Ausgehend von diesem Wissen, lässt sich das System des Baggers ebenfalls in solch eine Darstellung überführen. Unter der Annahme, dass keine Last vorhanden ist, besteht der Zusammenhang

$$\tau_{\text{meas}} = \tau_{\text{sys}} = \boldsymbol{W}_{\text{sys}}(q,\dot{q},\ddot{q})\Psi_{\text{sys}}. \qquad (4)$$

Hierbei ist $\tau_{meas}$ das auf Basis der Drücke gemessene bzw. berechnete Drehmoment, $\tau_{sys}$ das über die Bewegungsgleichung berechnete Drehmoment und $\boldsymbol{W}_{sys}$ mit $\Psi_{sys}$ der zugehörige Regressor bzw. Regressand. Ist eine Masse vorhanden, erweitert sich Gleichung 4 zu

$$\tau_{\text{meas}} = \tau_{\text{sys}} + \tau_{\text{pay}} = \boldsymbol{W}_{\text{sys}}(q,\dot{q},\ddot{q})\Psi_{\text{sys}} + \boldsymbol{W}_{\text{pay}}(q,\dot{q},\ddot{q})\Psi_{\text{pay}} \qquad (5)$$

mit dem Drehmoment $\tau_{pay}$ aufgrund der Last. Der Regressor der Last $\boldsymbol{W}_{pay}$ lässt sich aus $\boldsymbol{W}_{sys}$ ableiten, während der

Regressand der Last $\Psi_{pay}$ unbekannt ist. Das gemessene Moment setzt sich hier aus der Summe der Drehmomente des Systems und der Last zusammen. Dieser Zusammenhang kann ausgenutzt werden, um den Parametervektor der Last $\Psi_{pay}$ zu bestimmen. Gleichung 5 kann entsprechend Gleichung 6 umgeformt werden.

$$\begin{aligned} & \tau_{\text{pay}} = \tau_{\text{meas}} - \tau_{\text{sys}} \\ \Leftrightarrow \quad & \tau_{\text{pay}} = \tau_{\text{meas}} - \boldsymbol{W}_{\text{sys}}(q, \dot{q}, \ddot{q})\Psi_{\text{sys}} \\ \Leftrightarrow \quad \boldsymbol{W}_{\text{pay}}(q, \dot{q}, \ddot{q})\Psi_{\text{pay}} & = \tau_{\text{meas}} - \boldsymbol{W}_{\text{sys}}(q, \dot{q}, \ddot{q})\Psi_{\text{sys}} \end{aligned} \tag{6}$$

Mit Gleichung 6 ist eine Beziehung geschaffen, mit der der Parametervektor $\Psi_{pay}$ über übliche Algorithmen wie den Recursive-Least-Squares-Algorithmus online bestimmt werden kann. Die Bewegungsgleichungen betrachten nur die offene kinematische Kette, d.h. die Zylinder werden vernachlässigt. Diese haben jedoch Einfluss auf das gemessene Moment $\tau_{meas}$, weshalb das Drehmoment aufgrund der Zylinder entsprechend der weiter unten stehenden Ausführungen vom gemessenen Drehmoment abgezogen werden muss.

## Schätzverfahren

Schätzverfahren, auch Schätzmethoden genannt, dienen im betrachteten Fall dem Schätzen von unbekannten Parametern. Die Schätzung verläuft dabei über Messwerte von einem zugrundeliegenden System, wobei das System von den Parametern beeinflusst werden muss. Die mathematische Beschreibung des Systems kann dabei verschiedene Strukturen aufweisen, die entsprechend von den Schätzverfahren ausgenutzt werden. Im Folgenden wird auf eine besondere Struktur eingegangen und mögliche Schätzverfahren vorgestellt.

Es wird das System

$$\tau = \boldsymbol{W}\Psi \tag{7}$$

betrachtet. Der Parametervektor $\Psi$ wird dabei so geschätzt, dass das Optimierungsproblem

$$\min_{\hat{\Psi}} \left[ \frac{1}{2} (y - \boldsymbol{W}\Psi)^T (y - \boldsymbol{W}\Psi) \right] \tag{8}$$

gelöst bzw. das Kostenfunktional minimiert wird. Die Minimierung dieses Problems wird auch als Methode der kleinsten Fehlerquadrate bzw. Least-Squares-Methode genannt. Es wird die Abweichung des gemessenen Ausgangs *y* und des Modellausgangs $\boldsymbol{W}\Psi$ über $\Psi$ minimiert. Eine Möglichkeit wäre, das System und somit die Parameter des Systems über Trajektorien anzuregen und die entsprechenden Signale für den Ausgang und den Regressor aufzunehmen. Anschließend wird offline über den gesamten Datensatz die Optimierung angewandt. Im Falle der Lastmassenschätzung ist eine durchgehende Schätzung der Lastmasse notwendig, was die Verwendung von rekursive Verfahren wie den Recursive-Least-Squares-Algorithmus erfordert.

Die Lastmassenschätzung geschieht somit über den Recursive-Least-Squares-Algorithmus (RLS-Algorithmus), der in den Gleichungen 9 bis 13 beschrieben ist.

$$\hat{\tau}(t) = W(t)\hat{\Psi}(t-1) \tag{9}$$

$$\boldsymbol{Q}(t) = \frac{\boldsymbol{P}(t-1)}{\lambda + W(t)\boldsymbol{P}(t-1)W^T(t)} \tag{10}$$

$$K(t) = \boldsymbol{Q}(t)W^T(t) \tag{11}$$

$$\hat{\Psi}(t) = \hat{\Psi}(t-1) + K(t)\left(\tau(t) - \hat{\tau}(t)\right) \tag{12}$$

$$\boldsymbol{P}(t) = \frac{1}{\lambda}\left(\boldsymbol{P}(t-1) - \frac{\boldsymbol{P}(t-1)W^T(t)W(t)\boldsymbol{P}(t-1)}{\lambda + W(t)\boldsymbol{P}(t-1)W^T(t)}\right) \qquad (13)$$

Es handelt sich hierbei bereits um eine modifizierte Variante des RLS-Algorithmus, welcher den sogenannten Vergessensfaktor $\lambda$ enthält. Der Vergessensfaktor $\lambda$ wird im Intervall $\lambda \in [0, 1]$ gewählt und bewirkt ein geringeren Einfluss von vergangenen Messwerten auf die Schätzung. Typische Werte für den Vergessensfaktor $\lambda$ sind im Bereich $0.98 \leq \lambda \leq 0.995$. Wird $\lambda = 1$ gewählt, hat man den ursprünglichen RLS-Algorithmus. Es wird das ursprüngliche Optimierungsproblem

$$\min_{\Psi} \sum_{k=1}^{t_{act}} \left(\tau(k) - \boldsymbol{W}(k)\Psi\right)^2 \qquad (14)$$

zum Optimierungsproblem

$$\min_{\Psi} \sum_{k=1}^{t_{act}} \lambda^{t_{act}-k} \left(\tau(k) - \boldsymbol{W}(k)\Psi\right)^2 \qquad (15)$$

modifiziert, wobei $t_{act}$ die aktuelle Samplingzeit ist. Das modifizierte Optimierungsproblem verdeutlicht den Einfluss des Vergessensfaktor $\lambda$. Für den RLS-Algortihmus existiert eine Vielzahl an Erweiterungen, die ggf. zu Verbesserungen der Schätzung führen können. Andere Verfahren zur Schätzung sind ebenfalls denkbar.

**Identifikation**

Mit der Identifikation werden die Systemparameter ermittelt. Alternativ könnten die Parameter aus den Datenblättern entnommen und berechnet werden. Im montierten Zustand kommen jedoch zu den einzelnen Komponenten wie Ausleger, Stiel und Löffel zusätzliche Körper mit eignen Trägheiten hinzu. Zudem sind Toleranzen vorhanden, die ebenfalls eine Abweichung der tatsächlichen Parameter von den Parametern der Datenblätter bewirken. Somit ist anzunehmen, dass die CAD-Daten nicht exakt mit der Realität übereinstimmen und ggf. eine Identifikation der Systemparameter $\Psi_{sys}$ nötig ist. Diese kann in zwei Phasen ablaufen und ist ohne Lastmasse umzusetzen. Nachfolgend wird dabei die Parameteridentifikation der Systemparameter beschrieben. Dabei wird mit der statischen Parameteridentifikation begonnen. Daraufhin folgt die dynamische Parameteridentifikation. Dabei kann die dynamische Parameteridentifikation die Parameter aus der statischen Identifikation verwenden oder von Grund auf alle Parameter nochmals identifizieren. Mit den statisch identifizierten Parametern kann bereits eine statische Lastmassenschätzung durchgeführt werden. Für eine dynamische Lastmassenschätzung benötigt es die dynamisch identifizierten Parameter.

**Statische Parameteridentifikation**

Zunächst kann eine statische Identifikation durchgeführt werden. Ausgehend von Gleichung 7 folgt für den statischen Fall die Struktur

$$\tau = \begin{bmatrix} \tau_{\text{meas},2} \\ \tau_{\text{meas},3} \\ \tau_{\text{meas},4} \end{bmatrix}$$
$$W = g_z \begin{bmatrix} c(\psi_{234}) & -s(\psi_{234}) & 0 & 0 & 0 & 0 \\ c(\psi_{234}) & -s(\psi_{234}) & c(\psi_{23}) & -s(\psi_{23}) & 0 & 0 \\ c(\psi_{234}) & -s(\psi_{234}) & c(\psi_{23}) & -s(\psi_{23}) & c(\psi_2) & -s(\psi_2) \end{bmatrix} \quad (16)$$
$$\Psi = \begin{bmatrix} m_4 r_{4,x} \\ m_4 r_{4,y} \\ m_4 a_{3,x} + m_3 r_{3,x} \\ m_3 r_{3,y} \\ (m_4 + m_3)\, a_{2,x} + m_2 r_{2,x} \\ m_2 r_{2,y} \end{bmatrix}$$

mit $c(\cdot) = \cos(\cdot)$, $s(\cdot) = \sin(\cdot)$ und der Erdbeschleunigung $g_z\ 9.81 \frac{\text{m}}{\text{s}^2}$. Es wird angenommen, dass der Bagger eben steht, weshalb nur die z-Komponente der Erdbeschleunigung im Koordinatensystem 0 betrachtet wird. Trifft die Annahme nicht zu, muss der Regressor ***W*** entsprechend der Lage des Baggers angepasst werden. Eine Alternative zur Struktur in Gleichung 17 ist

$$\tau = \begin{bmatrix} \tau_{\text{meas},2} - \tau_{\text{meas},3} \\ \tau_{\text{meas},3} - \tau_{\text{meas},4} \\ \tau_{\text{meas},4} \end{bmatrix}$$
$$W = g_z \begin{bmatrix} c(\psi_{234}) & -s(\psi_{234}) & 0 & 0 & 0 & 0 \\ 0 & 0 & c(\psi_{23}) & -s(\psi_{23}) & 0 & 0 \\ 0 & 0 & 0 & 0 & c(\psi_2) & -s(\psi_2) \end{bmatrix} \quad (17)$$
$$\Psi = \begin{bmatrix} m_4 r_{4,x} \\ m_4 r_{4,y} \\ m_4 a_{3,x} + m_3 r_{3,x} \\ m_3 r_{3,y} \\ (m_4 + m_3)\, a_{2,x} + m_2 r_{2,x} \\ m_2 r_{2,y} \end{bmatrix},$$

was durch die Momentendifferenz zu einem neuen Regressor führt und so aufgrund der Block-Diagonalstruktur eine bessere Kondition verspricht. Für die statische Identifikation sollte eine Vielzahl verschiedener Konfigurationen der Ausrüstung angefahren werden. Auf Basis der gemessenen Daten kann schließlich die Identifikation mit bspw. Least-Squares-Verfahren durchgeführt werden.

Die dynamische Parameteridentifikation kann auf Basis der Ergebnisse der statischen Parameteridentifikation oder direkt geschehen. Zudem können die Parameter mit den CAD-Daten und den Parametern der statischen Identifikation initialisiert werden. Sind Parameter bekannt, lässt sich die Struktur

$$\begin{aligned} & \tau_{\mathrm{meas}} = \tau_{\mathrm{sys}} = \boldsymbol{W}_{\mathrm{sys}} \Psi_{\mathrm{sys}} = \boldsymbol{W}_{\mathrm{kwn}} \Psi_{\mathrm{kwn}} + \boldsymbol{W}_{\mathrm{uwkn}} \Psi_{\mathrm{uwkn}} \\ \Leftrightarrow \quad & \left(\tau_{\mathrm{meas}} - \boldsymbol{W}_{\mathrm{kwn}} \Psi_{\mathrm{kwn}}\right) = \boldsymbol{W}_{\mathrm{uwkn}} \Psi_{\mathrm{uwkn}} \\ \text{mit} \quad & \Psi_{\mathrm{sys}} = \begin{bmatrix} \Psi_{\mathrm{wkn}} \\ \Psi_{\mathrm{uwkn}} \end{bmatrix} \qquad \boldsymbol{W}_{\mathrm{sys}} = \begin{bmatrix} \boldsymbol{W}_{\mathrm{kwn}} & \boldsymbol{W}_{\mathrm{uwkn}} \end{bmatrix} \end{aligned} \tag{18}$$

verwenden. Der Parametervektor $\Psi$ und der Regressor $\boldsymbol{W}$ werden in bekannte Teile ($\Psi_{kwn}$ und $\boldsymbol{W}_{kwn}$) und unbekannten Teile ($\Psi_{ukwn}$ und $\boldsymbol{W}_{ukwn}$) separiert. Die bekannten Parameter können dabei aus der statischen Identifikation oder den CAD-Daten stammen. Alternativ kann der RLS-Algorithmus mit bekannten Parametern als Startwerte initialisiert werden, um so eine verbesserte Identifikation zu erzielen.

Um die Systemparameter identifizieren zu können, bedarf es einer ausreichenden Anregung des Systems. Eine unzureichende Anregung bedeutet eine schlechte Konditionszahl des Regressors, worunter die identifizierten Parameter leiden. Sinusförmige Trajektorien haben sich in der Robotik für die Anregung und Identifikation etabliert. Gleichung 19 zeigt solch eine Trajektorie, mit den Parametern $b_{i,k}$ und $c_{i,k}$, der Grundfrequenz *f*, dem Winkeloffset $\psi_{i,0}$ und der Anzahl der betrachteten Harmonischen *N*.

$$\begin{aligned} \psi_i(t) &= \sum_{k=1}^{N} b_{i,k} \sin(2\pi k f t) + c_{i,k} \cos(2\pi k f t) + \psi_{i,0} \\ \dot{\psi}_i(t) &= \sum_{k=1}^{N} (2\pi k f)\, b_{i,k} \cos(2\pi k f t) - (2\pi k f)\, c_{i,k} \sin(2\pi k f t) \\ \ddot{\psi}_i(t) &= \sum_{k=1}^{N} -(2\pi k f)^2\, b_{i,k} \sin(2\pi k f t) - (2\pi k f)^2\, c_{i,k} \cos(2\pi k f t) \end{aligned} \tag{19}$$

Die Parameter $b_{i,k}$ und $c_{i,k}$, werden über eine Optimierung bestimmt. Die Grundfrequenz *f* und die Anzahl der Harmonischen *N* sind im Vorfeld festzulegen. Die mechanische Struktur sollte nicht angeregt werden, was eine Begrenzung der höchsten Frequenz zur Folge hat. Das Optimierungsproblem kann als

$$\begin{aligned} \underset{b_{i,k},c_{i,k}}{\text{minimize}} \quad & \kappa(\boldsymbol{W}) = \|\boldsymbol{W}\|\|\boldsymbol{W}^{-1}\| \quad \text{or} \quad -\log\left(\det\left(\boldsymbol{W}^T\boldsymbol{W}\right)\right) \\ \text{subject to} \quad & \psi_{i,min} \le \psi_i(t) \le \psi_{i,max}, && \forall i,t, \\ & \dot{\psi}_{i,min} \le \dot{\psi}_i(t) \le \dot{\psi}_{i,max} && \forall i,t, \\ & \ddot{\psi}_{i,min} \le \ddot{\psi}_i(t) \le \ddot{\psi}_{i,max}, && \forall i,t, \\ & \psi_i(t_0) = \psi_i(t_f) = 0, && \forall i,t, \\ & \dot{\psi}_i(t_0) = \dot{\psi}_i(t_f) = 0, && \forall i,t, \\ & \ddot{\psi}_i(t_0) = \ddot{\psi}_i(t_f) = 0, && \forall i,t \end{aligned} \tag{20}$$

formuliert werden. Eine Möglichkeit das Problem zu lösen, ist mit der Monte-Carlo-Methode (Zufallssuche), bei der mehrere Startwerte für die Parameter generiert und anschließend vielversprechende Trajektorien ausgewählt werden. Diese werden dann mit üblichen Optimierungsverfahren (in Matlab z.B. mit *fmincon)* unter Berücksichtigung der Beschränkungen optimiert. Es gibt weitere Modifikationen des Optimierungsproblems, um bspw. das Rauschen der Sensoren zu berücksichtigen, da Rauschen die Konditionszahl beeinflusst. Schließlich kann die entworfene Trajektorie für die Identifikation verwendet und die notwendigen Daten zur Identifikation aufgenommen werden. Notwendige Daten wären die Drücke der Zylinder, die Winkel, die Winkelgeschwindigkeiten und die Winkelbeschleunigungen. Daraus kann der Regressor und der Ausgang abgeleitet und die Schätzung über bspw. Least-Squares-Verfahren ausgeführt werden.

**Lastmassenschätzung**

Das vorgestellte Schätzverfahren wird nun auf die hergeleiteten Bewegungsgleichungen angewandt. Dabei werden die identifizierten Systemparameter $\Psi_{sys}$ verwendet. Die Struktur von Gleichung 7 ist bereits in Gleichung 6 gegeben. Gleichung 21 verdeutlicht nochmals den Zusammenhang.

$$\underbrace{\boldsymbol{W}_{\text{pay}}(q,\dot{q},\ddot{q})}_{\boldsymbol{W}}\underbrace{\Psi_{\text{pay}}}_{\Psi} = \underbrace{\tau_{\text{meas}} - \boldsymbol{W}_{\text{sys}}(q,\dot{q},\ddot{q})\Psi_{\text{sys}}}_{\tau} \quad (21)$$

Hiermit lässt sich nun über den RLS-Algortihmus die Lastmasse bestimmen. Der Parametervektor der Last $\Psi_{pay}$ setzt sich aus der Lastmasse $m_{pay}$, der Linearkombination von Lastmasse und Schwerpunktlage $r_{pay,i}m_{pay}$ und den Trägheiten $I_{pay,ij}$ zusammen und ist in Gleichung 22 definiert. Der Parametervektor des Systems $\Psi_{sys}$ wird nachfolgend beschrieben.

$$\Psi_{\text{pay}} = \begin{bmatrix} m_{\text{pay}} \\ r_{\text{pay},x}m_{\text{pay}} \\ r_{\text{pay},y}m_{\text{pay}} \\ r_{\text{pay},z}m_{\text{pay}} \\ I_{\text{pay},xx} \\ I_{\text{pay},xy} \\ I_{\text{pay},xz} \\ I_{\text{pay},yy} \\ I_{\text{pay},yz} \\ I_{\text{pay},zz} \end{bmatrix} \quad (22)$$

Welche Bewegungsgleichungen sich zur Identifikation eines Parameters eignet, lässt sich anhand des Regressors

$$\boldsymbol{W}_{\text{pay}} = \begin{bmatrix} w_{1,1} & w_{1,2} & w_{1,3} & w_{1,4} & w_{1,5} & w_{1,6} & w_{1,7} & w_{1,8} & w_{1,9} & w_{1,10} \\ w_{2,1} & w_{2,2} & w_{2,3} & w_{2,4} & w_{2,5} & w_{2,6} & w_{2,7} & w_{2,8} & w_{2,9} & w_{2,10} \\ w_{3,1} & w_{3,2} & w_{3,3} & w_{3,4} & w_{3,5} & w_{3,6} & w_{3,7} & w_{3,8} & w_{3,9} & w_{3,10} \\ w_{4,1} & w_{4,2} & w_{4,3} & w_{4,4} & w_{4,5} & w_{4,6} & w_{4,7} & w_{4,8} & w_{4,9} & w_{4,10} \end{bmatrix} \quad (23)$$

ermitteln. Die Identifikation eines Parameters ist nur möglich, wenn dieser auch angeregt wird, d.h. für den Eintrag im Regressor muss $w_{i,j} \neq 0$ gelten. Welche Einträge von Null verschieden sind, hängt schlussendlich von dem System und den Bewegungen ab. Es ergeben sich verschiedene Möglichkeiten die Last $m_{pay}$ über die Bewegungsgleichungen zu schätzen. Zum einen können die normalen Momente

$$\tau = \begin{bmatrix} \tau_{\text{meas},2} \\ \tau_{\text{meas},3} \\ \tau_{\text{meas},4} \end{bmatrix} \quad (24)$$

oder wieder die Differenzmomente

$$\tau = \begin{bmatrix} \tau_{\text{meas},2} - \tau_{\text{meas},3} \\ \tau_{\text{meas},3} - \tau_{\text{meas},4} \\ \tau_{\text{meas},4} \end{bmatrix} \quad (25)$$

für die Schätzung verwendet werden. Die Differenzmomente bieten den Vorteil, dass weniger Singularitäten auftreten können und der Regressor mehr Nullelemente besitzt. Es ist darauf zu achten, dass die Lastmasse nicht in jeder Bewegungsgleichung für die betrachteten Gelenke auftritt. Für die letzte Komponente, an der sich die Last befindet, tritt die Masse der Last $m_{pay}$ nur in Linearkombination mit dem Schwerpunkt ($r_{pay,x}m_{pay}$, $r_{pay,y}m_{pay}$ und $r_{pay,z}m_{pay}$) auf. Für die anderen Komponenten ist die Masse der Last $m_{pay}$ explizit vorhanden. Die eigentliche Lastmasse $m_{pay}$ lässt sich somit nur über die Drehmomentgleichungen des Auslegers oder des Stiels bestimmen, deren Regressoren wie folgt besetzt sind:

$$\boldsymbol{W}_{\text{pay},i} = \begin{bmatrix} w_{i,1} & w_{i,2} & w_{i,3} & w_{i,4} & 0 & 0 & 0 & 0 & 0 & 0 \end{bmatrix} \quad \text{für} \quad i = 2,3 \quad (26)$$

Der Index i beschreibt die Zeile des Regressors $\boldsymbol{W}_{pay}$ und $w_{i,j}$ mit $j$ = 1, 2, 3, 4 sind die Spaltenelemente des Regressors. Vergleicht man Gleichung 26 und den Parametervektor der Last aus Gleichung 22, so ist eine Anregung der Last $m_{pay}$ sowie der Linearkombinationen von Last und Schwerpunkt $r_{pay,x}m_{pay}$, $r_{pay,y}m_{pay}$ und $r_{pay,z}m_{pay}$ zu erkennen. Für den Löffel, diejenige Komponente an der die Last angebracht ist, liegt der Regressor.

$$\boldsymbol{W}_{\text{pay},4} = \begin{bmatrix} 0 & w_{4,2} & w_{4,3} & w_{4,4} & w_{4,5} & w_{4,6} & w_{4,7} & w_{4,8} & w_{4,9} & w_{4,10} \end{bmatrix} \quad (27)$$

vor. Wie bereits erläutert, wird die Lastmasse $m_{pay}$ nicht angeregt ($w_{4,1}$ = 0) und kann somit nicht über die Drehmomentengleichung des Löffels bestimmt werden. Es werden jedoch die anderen Einträge des Parametervektors $\Psi_{pay}$ angeregt. Werden die Einträge des Regressors detaillierter analysiert, ist eine permanente Anregung der Lastmasse durch die Regressoreinträge $w_{2,1}$, $w_{3,1}$, $w_{4,2}$, $w_{4,3}$ und $w_{4,4}$ ersichtlich. Die anderen Einträge treten nur bei Geschwindigkeiten und Beschleunigungen auf. Es ergeben sich zwei Varianten die Lastmasse zu schätzen:

**Variante A:**

Verwenden der Drehmomentgleichung von Ausleger oder Stiel. Es werden alle angeregten Parameter des Parametervektors geschätzt. Der Parameter $r_{pay,z}m_{pay}$ kann ggf. vernachlässigt werden, da der Schwerpunkt der Last nicht stark von Null abweichen sollte.

**Variante B:**

Verwenden der Drehmomentgleichung von Ausleger oder Stiel und des Löffels. Die Bewegungsgleichung des Löffels bietet den Vorteil der permanenten Anregung von der Parameter $r_{pay,x}m_{pay}$, $r_{pay,y}m_{pay}$ und $r_{pay,z}m_{pay}$. Aus diesem Grund ist eine genauere Schätzung der Parameter zu erwarten. Diese können dann in den Bewegungsgleichungen des Auslegers oder Stiels berücksichtigt werden.

Es wäre auch eine Kombination der Parameterschätzungen über die Bewegungsgleichungen des Auslegers und Stiels denkbar. Bei hohen Beschleunigungen sinkt der Einfluss der Last während der Einfluss der anderen Einträge steigt. Sollten die Schätzungen stark verfälscht werden, können die Regressorelemente überwacht und die Schätzung pausiert werden. Fig. 3 zeigt zusammengefasst den gesamten Ablauf der Lastmassenschätzung.

Es soll der Parametervektoren im Detail vorgestellt werden. Der Parametervektor des Systems setzt sich aus 24 Parametern zusammen, siehe Gleichung 28.

$$\Psi_{\text{sys}} = \begin{bmatrix} \Psi_{\text{sys},1} & \Psi_{\text{sys},2} & \cdots & \Psi_{\text{sys},23} & \Psi_{\text{sys},24} \end{bmatrix}^T \quad (28)$$

Der Parametervektor $\Psi_{sys}$ besteht aus Trägheiten $\mathbf{I}_i$, Massen $m_i$ und Lageinformationen $a_i$ und $r_i$, wobei $a_i$ als bekannt vorausgesetzt wird (Definitionen siehe vorstehend unter Bewegungsgleichungen). Die Parameter treten explizit und/oder in Linearkombinationen auf, wie in Gleichung 29 zu sehen ist.

$$
\begin{aligned}
\Psi_{sys,1} &= I_{4,xx} - I_{4,yy} \\
\Psi_{sys,2} &= I_{4,xy} \\
\Psi_{sys,3} &= I_{4,xz} \\
\Psi_{sys,4} &= I_{4,yz} \\
\Psi_{sys,5} &= I_{4,zz} \\
\Psi_{sys,6} &= r_{4,x} m_4 \\
\Psi_{sys,7} &= r_{4,y} m_4 \\
\Psi_{sys,8} &= I_{3,xx} - I_{3,yy} - a_{3,x}^2 m_4 \\
\Psi_{sys,9} &= I_{3,xy} \\
\Psi_{sys,10} &= I_{3,xz} - a_{3,x} r_{4,z} m_4 \\
\Psi_{sys,11} &= I_{3,yz} \\
\Psi_{sys,12} &= I_{3,zz} + a_{3,x}^2 m_4 \\
\Psi_{sys,13} &= r_{3,x} m_3 + a_{3,x} m_4 \\
\Psi_{sys,14} &= r_{3,y} m_3 \\
\Psi_{sys,15} &= I_{2,xx} - I_{2,yy} - a_{2,x}^2 m_3 - a_{2,x}^2 m_4 \\
\Psi_{sys,16} &= I_{2,xy} \\
\Psi_{sys,17} &= I_{2,xz} - a_{2,x} r_{3,z} m_3 - a_{2,x} r_{4,z} m_4 \\
\Psi_{sys,18} &= I_{2,yz} \\
\Psi_{sys,19} &= I_{2,zz} + a_{2,x}^2 m_3 + a_{2,x}^2 m_4 \\
\Psi_{sys,20} &= r_{2,x} m_2 + a_{2,x} m_3 + a_{2,x} m_4 \\
\Psi_{sys,21} &= r_{2,y} m_2 \\
\Psi_{sys,22} &= I_{1,zz} + I_{2,yy} + I_{3,yy} + I_{4,yy} + \left(a_{1,x}^2 + a_{1,y}^2\right) m_2 + \\
&\quad \left(a_{1,x}^2 + a_{1,y}^2 + a_{2,x}^2\right) m_3 + \left(a_{1,x}^2 + a_{1,y}^2 + a_{2,x}^2 + a_{3,x}^2\right) m_4 \\
\Psi_{sys,23} &= r_{1,x} m_1 + a_{1,x} m_2 + a_{1,x} m_3 + a_{1,x} m_4 \\
\Psi_{sys,24} &= a_{1,y} m_2 + a_{1,x} m_3 + a_{1,x} m_4
\end{aligned}
\qquad (29)
$$

Diese Darstellung wurde mit Hilfe der Open-Source Pyhton-Bibliothek SymPy-Botics hergeleitet. Das System wird über die Denavit-Hartenberg-Transformation beschrieben und ein Gravitationsvektor wird angegeben. Daraufhin werden die Bewegungsgleichungen erstellt und daraus numerisch der Parametervektor abgeleitet. Es sei darauf hingewiesen, dass zu diesem Zweck auch symbolische Verfahren existieren. Die Bibliothek lässt jedoch keine variable Erdbeschleunigung zu. Aus diesem Grund wurden die Bewegungsgleichungen auch in Matlab mit der Symbolic-Toolbox hergeleitet und die linear in den Parametern Darstellung mit variabler Erdbeschleunigung abgeleitet. Der beschriebene Parametervektor lässt sich erweitern und es können beispielsweise Reibkoeffizienten mitgeschätzt werden. Als Beispiel könnte die Gleitreibung in den Gelenken

$$\tau_{i,reib} = \dot{\psi}_i \mu_i, \quad \text{mit} \quad i = 1, \ldots, 4 \tag{30}$$

durch Anpassung des Regressors $\boldsymbol{W}_{sys}$ und des Parametervektors $\Psi_{sys}$ mitgeschätzt werden. Der neue Parametervektor ist in Gleichung 31 zu sehen.

$$\Psi_{\text{sys,ext}} = \begin{bmatrix} \Psi_{\text{sys},1} & \Psi_{\text{sys},2} & \ldots & \Psi_{\text{sys},23} & \Psi_{\text{sys},24} & \mu_1 & \mu_2 & \mu_3 & \mu_4 \end{bmatrix}^T \tag{31}$$

Der Regressor muss hierbei um die Winkelgeschwindigkeiten der jeweiligen Gelenke angepasst werden, siehe Gleichung 32.

$$\begin{bmatrix} \tau_{\text{meas},1} \\ \tau_{\text{meas},2} \\ \tau_{\text{meas},3} \\ \tau_{\text{meas},4} \end{bmatrix} = \underbrace{\begin{bmatrix} & \dot{\psi}_1 & 0 & 0 & 0 \\ \boldsymbol{W}_{\text{sys}} & 0 & \dot{\psi}_2 & 0 & 0 \\ & 0 & 0 & \dot{\psi}_3 & 0 \\ & 0 & 0 & 0 & \dot{\psi}_4 \end{bmatrix}}_{\boldsymbol{W}_{\text{sys,ext}}} \Psi_{\text{sys,ext}} \tag{32}$$

## Zylindermassenkompensation

Die aufgestellten Bewegungsgleichungen enthalten nur die offene kinematische Kette. Die Zylinder wurden nicht betrachtet. Die gemessenen Drücke enthalten jedoch die Trägheiten und die Massen der Zylinder, was das berechnete Drehmoment $\tau_{meas}$ verfälscht. Somit ist eine Kompensation des Drehmoments nötig, um die Effekte der Zylinder zu berücksichtigen. Eine Darstellung für die benötigten Größen für die Kompensation ist in Fig. 4 gegeben.

Für die Kompensation wurden die Zylinder als Punktmassen angenommen, wobei nur die Erdbeschleunigung g auf die Punktmassen wirkt. Es werden also die Trägheitsmomente und die Beschleunigungen aufgrund der Bewegungen vernachlässigt. Fig. 4 zeigt zwei Verbindungselemente (($i$ - 1)te und $i$-te Komponente des Manipulators), die über ein Drehgelenk und ein Hydraulikzylinder verbunden sind, wie es beim Bagger der Fall ist. Des Weiteren sind alle Größen eingezeichnet, die für die Kompensation benötigt sind. Es sei angemerkt, dass die Lagerkräfte nur auf der Stangenseite abgebildet sind und Lagerkräfte genauso auf der Zylinderseite wirken.

Das Drehmoment $\tau_{i,rod}$ entsteht durch die Lagerkräfte $F_{i,rod,x}$, $F_{i,rod,y}$, $F_{i,cyl,x}$ und $F_{i,cyl,y}$ des Zylinders. Die Kräfte sind parallel und orthogonal zum Hydraulikzylinder. Die Kräfte $F_{i,rod,x}$ und $F_{i,cyl,x}$ enthalten nur die Masse ihrer jeweiligen Komponente ($m_{i,rod}$ bzw. $m_{i,cyl}$), d.h. $F_{i,rod,x}$ und $F_{i,cyl,x}$ berechnen sich jeweils mit $m_{i,rod}$ und $m_{i,cyl}$. Die Berechnung der Lagerkräfte ist im Folgenden für die Stangenseite beschrieben:

$$\begin{aligned} \tau_{i,\text{cyl,act}} &= -m_{i,\text{cyl}} \left( r_{i,\text{cyl}} \times g \right) - m_{i,\text{rod}} \left( r_{i,rod} \times g \right) \\ F_{i,rod,y} &= \frac{\left[ \tau_{i,\text{cyl,act}} \right]_z}{d_i + h_i} \\ F_{i,rod,x} &= \left[ -m_{i,rod} g \right]_x \\ \tau_{i,\text{rod}} &= \left[ r_{i,\text{cyl}} \times \begin{bmatrix} F_{i,rod,x} \\ F_{i,rod,y} \\ 0 \end{bmatrix} \right]_z \end{aligned} \tag{33}$$

Das Drehmoment $\tau_{i,cyl,act}$ wirkt auf das Gelenk an der Bodenseite des Hydraulikzylinders, $\boldsymbol{r}_{i,cyl}$ und $\boldsymbol{r}_{i,rod}$ sind die Ortsvektoren zu den Gelenken des Hydraulikzylinders für die Boden- und Stangenseite und [·]x bzw. [·]z stellt ein Operator dar, der die x- bzw. z-Komponente des Vektors auswählt. Die Parameter $d_i$ und $h_i$ beschreiben den Hub bzw. die Einbaulänge im eingefahrenen Zustand des Hydraulikzylinders. Für die Berechnung der Lagerkräfte auf der Bodenseite sind die Masse und die Ortsvektoren aus Gleichung 33 zu ergänzen.

Diese Berechnungsvorschrift muss iterativ für alle Gelenke der Hydraulikzylinder, die nachfolgend zum Gelenk $J_{i-1}$ sind, durchgeführt werden. Es muss darauf geachtet werden, dass alle Parameter im gleichen Koordinatensystem angegeben sind bzw. während der Berechnung passend transformiert werden. So bietet es sich an, die Lagerkräfte vorerst im Koordinatensystem des betrachteten Zylinders auszurechnen und daraufhin in die Koordinatensystem der Gelenke zu transformieren. In die Kompensation fließen nicht die Lagerkräfte vorheriger Komponenten ein, beispielsweise wirken sich die Lagerkräfte $F_{i,cyl,x}$ und $F_{i,cyl,y}$ nicht auf das gemessene Drehmoment von $J_i$ aus.

Eine Besonderheit bei der Berechnung der Lagerkräfte ist das Koppelgelenk, siehe Fig. 5. Die für die Zylinderkompensation nötigen Lagerkräfte sind grün eingezeichnet und im Koordinatensystem des Stiels angegeben. Die Winkel $\xi_i$ mit i = 6, 7, 8, 9, 10 sind Hilfswinkel, um die Verteilung der Kräfte zu berechnen. Die Winkel bauen auf den Definitionen aus Arbeitspaket 1 auf. Für die Übersicht wurde auf die Ortsvektoren und Massenschwerpunkte mit Erdbeschleunigung verzichtet.

Die Berechnung der Zylinderlagerkräfte geschieht entsprechend Vorschrift 33 für die Boden- und Stangenseite. Die Kräfte an der Bodenseite wirken direkt auf den Stiel, weshalb keine weitere Rechnung mehr nötig ist und eine Transformation in das Koordinatensystem des Stiels ausreicht. Für die Stangenseite müssen die Kräfte über das Koppelgelenk auf Stiel und Löffel verteilt werden. Über das Kräftegleichgewicht lassen sich schließlich die Kräfte $F_{link1,x}$, $F_{link1,y}$, $F_{link1,y}$, $F_{link2,x}$ und $F_{link2,y}$ herleiten, wobei weiterhin die Annahme gilt, dass die Komponenten keine Beschleunigung erfahren. Die Hilfswinkel berechnen sich anhand Gleichung 34.

$$\begin{aligned}
\xi_7 &= \gamma_3 + \gamma_2 - \epsilon_2 \\
\xi_8 &= \arccos\left(\frac{(h_{\text{bucket}} + d_{\text{bucket}})^2 + l_{10}^2 - l_9^2}{2(h_{\text{bucket}} + d_{\text{bucket}})l_{10}}\right) \\
\xi_6 &= \xi_7 - \xi_8 \\
\xi_9 &= \arccos\left(\frac{l_{10}^2 + l_{11}^2 - l_{15}^2}{2l_{11}l_{10}}\right) \\
\xi_{10} &= \pi - \xi_9 - \xi_7
\end{aligned} \tag{34}$$

Schließlich lassen sich die unbekannten Lagerkräfte $F_{link1,x}$, $F_{link1,y}$, $F_{link2,x}$ und $F_{link2,y}$ durch Gleichung 35 ermitteln.

$$
\begin{aligned}
F_{\mathrm{link1},x} = &-\Big(g_y m_{\mathrm{link1}}\cos(\xi_7)\cos(\xi_{10}) - 2F_{i,\mathrm{rod,x}}\cos(\xi_7)\sin(\xi_{10}) - 2F_{i,\mathrm{rod,y}}\cos(\xi_7)\cos(\xi_{10})\\
&+ g_y m_{\mathrm{link2}}\cos(\xi_7)\cos(\xi_{10}) + 2g_x m_{\mathrm{link1}}\cos(\xi_7)\sin(\xi_{10}) + g_x m_{link1}\cos(\xi_{10})\sin(\xi_7)\\
&+ g_x m_{\mathrm{link2}}\cos(\xi_7)\sin(\xi_{10})\Big)\cdot\frac{1}{2\left(\cos(\xi_7)\sin(\xi_{10})+\cos(\xi_{10})\sin(\xi_7)\right)}\\
F_{\mathrm{link1},y} = &-\Big(g_x m_{\mathrm{link1}}\sin(\xi_7)\sin(\xi_{10}) - 2F_{i,\mathrm{rod,x}}\sin(\xi_7)\sin(\xi_{10}) - 2F_{i,\mathrm{rod,y}}\cos(\xi_{10})\sin(\xi_7)\\
&+ g_x m_{\mathrm{link2}}\sin(\xi_7)\sin(\xi_{10}) + g_y m_{\mathrm{link1}}\cos(\xi_7)\sin(\xi_{10}) + 2g_y m_{\mathrm{link1}}\cos(\xi_{10})\sin(\xi_7)\\
&+ g_y m_{\mathrm{link2}}\cos(\xi_{10})\sin(\xi_7)\Big)\cdot\frac{1}{2\left(\cos(\xi_7)\sin(\xi_{10})+\cos(\xi_{10})\sin(\xi_7)\right)}\\
F_{\mathrm{link2},x} = &-\Big(2F_{i,\mathrm{rod,y}}\cos(\xi_7)\cos(\xi_{10}) - 2F_{i,\mathrm{rod,x}}\cos(\xi_{10})\sin(\xi_7) - g_y m_{\mathrm{link1}}\cos(\xi_7)\cos(\xi_{10})\\
&- g_y m_{\mathrm{link2}}\cos(\xi_7)\cos(\xi_{10}) + g_x m_{\mathrm{link1}}\cos(\xi_{10})\sin(\xi_7) + g_x m_{link2}\cos(\xi_7)\sin(\xi_{10})\\
&+ 2g_x m_{link2}\cos(\xi_{10})\sin(\xi_7)\Big)\cdot\frac{1}{2\left(\cos(\xi_7)\sin(\xi_{10})+\cos(\xi_{10})\sin(\xi_7)\right)}\\
F_{\mathrm{link2},y} = &-\Big(2F_{i,\mathrm{rod,x}}\sin(\xi_7)\sin(\xi_{10}) - 2F_{i,\mathrm{rod,y}}\cos(\xi_7))\sin(\xi_{10}) - g_x m_{\mathrm{link1}}\sin(\xi_7))\sin(\xi_{10})\\
&- g_x m_{\mathrm{link2}}\sin(\xi_7))\sin(\xi_{10}) + g_y m_{\mathrm{link1}}\cos(\xi_7))\sin(\xi_{10}) + 2g_y m_{\mathrm{link2}}\cos(\xi_7))\sin(\xi_{10})\\
&+ g_y m_{\mathrm{link2}}\cos(\xi_{10})\sin(\xi_7)\Big)\cdot\frac{1}{2\left(\cos(\xi_7)\sin(\xi_{10})+\cos(\xi_{10})\sin(\xi_7)\right)}
\end{aligned}
\qquad (35)
$$

Die Variablen $g_x$ und $g_y$ stehen für die x- bzw. y-Komponente der Erdbeschleunigung im Koordinatensystem des Stiels, $m_{link1}$ und $m_{link2}$ sind Massen des Koppelgelenks, wobei $m_{\mathrm{link1}}$ die Masse des Verbindungsstücks zwischen Zylinder und Stiel und $m_{link2}$ zwischen Zylinder und Löffel ist. Sind die Lagerkräfte berechnet, lässt sich über die Ortsvektoren das Drehmoment aufgrund der Masse des Hydraulikzylinders berechnen und das gemessene Drehmoment korrigieren.

## Patentansprüche

**1.** System zur Bestimmung der Masse einer von einem Arbeitsgerät einer Maschine bewegten Nutzlast, umfassend:

ein Hubwerkelement, das entlang eines Pfades bewegbar ist und dazu ausgelegt ist, das Arbeitsgerät zu bewegen;
ein Sensorsystem, das dazu ausgelegt ist, mehrere Maschinenzustandssignale vorzusehen, die einen Zustand der Maschine angeben;
ein Kraftsensorsystem, das dazu ausgelegt ist, ein Hubkraftsignal vorzusehen, das eine Kraft auf das Hubwerkelement angibt; und
ein Steuergerät, das dazu ausgelegt ist:

Systemparameter zur Lastbestimmung zu verwenden, die aus vorkonfigurierten CAD-Daten, vorzugsweise werkseitig vorkonfigurierten CAD-Daten, und/oder einer laufenden Kalibrierung von Systemparametern stammen;
dann, wenn unbefriedigende Ergebnisse erzielt werden, eine Kalibrierung unter Verwendung der vorkonfigurierten Parameter als Initialisierung durchzuführen;
die Kalibrierung in einem unbelasteten Zustand, d.h. mit einem leeren Arbeitsgerät, durchzuführen, wobei dann automatisch vordefinierte Anregungstrajektorien für die Maschine verwendet werden oder Anweisungen an den Bediener zum Anregen der Parameter gegeben werden;
die Systemzustände unter Verwendung der Sensoren zu protokollieren und eine Systemidentifikation dieser Informationen durchzuführen; und
eine Masse der Nutzlast auf Grundlage identifizierter und/oder vorkonfigurierter Systemparameter und Systemzustände zu bestimmen, vorzugsweise auf Grundlage einer Position, einer Geschwindigkeit, einer Beschleunigung des Hubwerkelements und/oder einer Kraft bzw. eines Drehmoments an dem Hubwerkelement.

**2.** System nach Anspruch 1, wobei das Steuergerät ferner dazu ausgelegt ist, die Maschinenzustandssignale des Arbeitsgeräts zu empfangen, während das Arbeitsgerät auf einer mehrdimensionalen, vorzugsweise dreidimensionalen Bahn bewegt wird.

**3.** System nach einem der vorhergehenden Ansprüche, wobei das Steuergerät ferner dazu ausgelegt ist, vorkonfigurierte Systemparameter auf Grundlage von CAD-Daten zu verwenden und/oder eine Systemidentifizierungsprozedur durchzuführen und die Masse der Nutzlast zumindest teilweise auf Grundlage dieser Systemparameter zu bestimmen.

**4.** System nach Anspruch 3, wobei das Steuergerät ferner dazu ausgelegt ist,
die Systemparameter unter Verwendung der CAD-Daten als Initialisierung zu rekalibrieren, und/oder
die Parameter des Systems durch das Verwenden vordefinierter Trajektorien des Arbeitsgerätes automatisch zu identifizieren, und/oder
die Parameter des Systems zu identifizieren, indem dem Bediener Anweisungen gegeben werden, wie das Arbeitsgerät bewegt werden soll, um die zu identifizierenden Parameter anzuregen.

**5.** System nach einem der vorhergehenden Ansprüche, wobei das System ferner einen mit dem Hubwerkelement wirkverbundenen Aktuator umfasst, und vorzugsweise mit einem Schwenkelement und einem das Hubwerkelement umfassenden Arbeitsgerätesystem versehen ist, das ein Auslegerelement, ein Stielelement und das Arbeitsgerät umfasst.

**6.** System nach Anspruch 5, wobei die Maschinenzustandssignale eine Winkelposition, eine Winkelgeschwindigkeit und/oder eine Winkelbeschleunigung des Schwenkelements, des Auslegerelements, des Stielelements und/oder des Arbeitsgeräts umfassen, wobei vorzugsweise die Maschinenzustandssignale mindestens ein Gieren und ein Rollen der Maschine umfassen.

**7.** System nach einem der Ansprüche 5 oder 6, wobei die Parameter des Maschinensystems zumindest teilweise auf einer Trägheit und/oder einer Masse des Auslegers, des Stiels und des Arbeitsgeräts beruhen.

**8.** System nach einem der Ansprüche 5 bis 7, wobei die Systemparameter zumindest teilweise auf einer Position eines Schwerpunkts des Auslegerelements, des Stielelements und des Arbeitsgeräts beruhen, wobei die Position in einem Koordinatensystem angeordnet ist, das seinen Ursprung in einem jeweils zugehörigen Drehgelenk besitzt, und wobei eine x-Achse des Koordinatensystems mit den Drehgelenken eines aktuellen und eines nachfolgenden Elements fluchtet, eine z-Achse des Koordinatensystems mit der Drehachse des Drehgelenks eines aktuellen Elements übereinstimmt und eine y-Achse des Koordinatensystems so gewählt ist, dass ein rechtwinkliges Koordinatensystem, vorzugsweise ein rechtshändiges Koordinatensystem entsteht.

**9.** Verfahren, insbesondere ein in einem Steuergerät implementiertes Verfahren, zum Bestimmen der Masse einer von einem Arbeitsgerät einer Maschine bewegten Nutzlast, umfassend:

Verwenden von vordefinierten Systemparametern zur Lastbestimmung, die auf CAD-Daten basieren, und/oder für eine vorbestimmte Anzahl von Wiederholungen ein wiederholtes Durchführen einer Identifizierung der Systemparameter während Arbeitszyklen mit unbelastetem Arbeitsgerät, ;
Bestimmen des Drehmoments am Hubwerkelement und von Arbeitsgerätzuständen zum Identifizieren der Systemparameter für die unbelastete Maschine, während das Arbeitsgerät bewegt wird;
Durchführen der Systemidentifikation rekursiv oder mit einem Identifikationsverfahren für die unbelastete Maschine;
Empfangen eines zweiten Satzes von belasteten Maschinenzustandssignalen, wenn das Arbeitsgerät im belasteten Zustand bewegt wird;
Bestimmen eines Maschinenzustands mit belastetem Arbeitsgerät auf der Grundlage des zweiten Satzes von belasteten Maschinenzustandssignalen;
Bestimmen der Drehmomente an dem Arbeitsgerät unter Verwendung der Kraft auf das Hubwerkelement;
Berechnen des theoretischen Drehmoments an dem Arbeitsgerät auf der Grundlage der Systemparameter für den unbelasteten Fall; und
Bestimmen einer Masse der Nutzlast, zumindest teilweise auf Grundlage der Systemparameter, der Maschinenzustände mit belasteten Arbeitsgerät und einer Hubkraft bei belastetem Arbeitsgerät.

**10.** Verfahren nach Anspruch 9, wobei das Arbeitsgerät entlang einer mehrdimensionalen, vorzugsweise dreidimensionalen Bahn bewegt wird, während der erste Satz an unbelasteten Maschinenzustandssignalen empfangen wird.

**11.** Verfahren nach Anspruch 9 oder 10, wobei die mögliche Initialisierung der Systemparameter mit CAD-Daten für die Systemidentifikation durchgeführt wird, und/oder für die Systemparameter die vorkonfigurierten Parameter aus CAD-Daten verwendet werden.

**12.** Verfahren nach einem der vorhergehenden Ansprüche 9 bis 11, wobei
ein Drehmoment an einem Drehgelenk des Hubwerkelements zumindest teilweise auf Grundlage der Hubkraft bestimmt wird und die Maschinensystemparameter zumindest teilweise auf Grundlage des ermittelten Drehmoments bestimmt werden, wobei in dem Verfahren vorzugsweise
ein Drehmoment des belasteten Arbeitsgeräts am Drehgelenk des Hubwerkelements bestimmt wird, das zumindest teilweise auf der Hubkraft des belasteten Hubwerkelements basiert, und die Masse der Nutzlast, die zumindest teilweise auf dem Drehmoment des belasteten Arbeitsgeräts basiert, bestimmt wird; und/oder
die Masse der Nutzlast zumindest teilweise anhand der Systemparameter bestimmt wird.

**13.** Verfahren nach einem der vorhergehenden Ansprüche 9 bis 12, wobei die aktuelle Bewegung des Arbeitsgeräts evaluiert und die Schätzung der Lastmasse nur unter geeigneten Bedingungen angezeigt wird.

**14.** Verfahren nach einem der Ansprüche 9 bis 12, wobei ferner ein Schwenkelement und ein Arbeitsgerätesystem mit einem Auslegerelement, einem Stielelement und dem Arbeitsgerät vorgesehen ist, und das Arbeitsgerätesystem in unterschiedlicher Weise positioniert wird, während das Arbeitsgerät in einem unbelasteten Zustand entlang einer dreidimensionalen Bahn bewegt wird, wobei vorzugsweise das Arbeitsgerät die Bewegung im unbelasteten Zustand mit einer vorbestimmten Häufigkeit wiederholt und/oder die Bewegung des Arbeitsgeräts autonom ausgeführt wird oder dem Bediener dargelegt wird, wie er das Arbeitsgerät bewegen soll.

**15.** Maschine, umfassend:

ein Arbeitsgerät;
ein Hubwerkelement, das entlang einer Bahn bewegbar ist und mit dem Arbeitsgerät wirkverbunden ist, um das Arbeitsgerät zu bewegen;
ein Sensorsystem, das dazu ausgelegt ist, mehrere Maschinenzustandssignale vorzusehen, die einen Zustand der Maschine angeben;
ein Kraftsensorsystem, das dazu ausgelegt ist, ein Hubkraftsignal vorzusehen, das eine Kraft auf das Hubwerkelement angibt; und
ein Steuergerät, das dazu ausgelegt ist:

vordefinierte Systemparameter zur Lastbestimmung zu verwenden, die auf CAD-Daten basieren, und/oder eine rekursive Identifizierung der Systemparameter vorzunehmen, während Arbeitszyklen mit unbelastetem Arbeitsgerät;
das Drehmoment an dem Hubwerkelement und Arbeitsgerätzustände zum Identifizieren der Systemparameter für die unbelastete Maschine zu bestimmen, während das Arbeitsgerät bewegt wird;
die Systemidentifikation rekursiv oder mit einer Identifikationsprozedur für die unbelastete Maschine durchzuführen;
einen zweiten Satz von belasteten Maschinenzustandssignalen zu empfangen, wenn das Arbeitsgerät in einem belasteten Zustand bewegt wird;
einen Maschinenzustand eines belasteten Arbeitsgeräts auf Grundlage des zweiten Satzes von belasteten Maschinenzustandssignalen zu bestimmen;
die Drehmomente an dem Arbeitsgerät unter Verwendung der Kraft an dem Hubwerkelement zu bestimmen;
das theoretische Drehmoment am Arbeitsgerät auf Grundlage der Systemparameter für den unbelasteten Fall zu berechnen; und
eine Masse der Nutzlast zumindest teilweise auf Grundlage der Systemparameter, des Maschinenzustands des belasteten Arbeitsgeräts und der Hubkraft des belasteten Arbeitsgeräts zu bestimmen.

**16.** Verfahren, insbesondere ein in einem Steuergerät implementiertes Verfahren, zum Bestimmen von Maschinensystemparametern einer Maschine, wobei die Maschine ein Schwenkelement und ein Arbeitsgerätesystem mit einem Auslegerelement, einem Stielelement und einem Arbeitsgerät aufweist, wobei das Verfahren die Schritte umfasst:

Drehen des Schwenkelements relativ zu einem Rahmenelement, während das Auslegerelement, das Stielelement und das Arbeitsgerät in einem unbelasteten Zustand gemäß einer vordefinierten Trajektorie bewegt werden;
Empfangen eines Satzes unbelasteter Maschinenzustandssignale, wenn das Schwenkelement gedreht und das Auslegerelement, das Stilelement und das Arbeitsgerät im unbelasteten Zustand bewegt werden;
Bestimmen eines System-Maschinenzustands auf Grundlage des Satzes der unbelasteten Maschinenzustandssignale;
Bestimmen einer Hubkraft auf ein Hubwerkelement auf der Grundlage eines Hubwerkskraftsignals, das erzeugt wird, wenn das Arbeitsgerät im unbelasteten Zustand bewegt wird; und
Bestimmen von Maschinensystemparametern auf Grundlage des Maschinenzustands und der Hubkraft, wobei in dem Verfahren vorzugsweise
eine statische Systemidentifikation ausgeführt wird, bei der das Auslegerelement, das Stielelement und das Arbeitsgerät in einer Vielzahl von verschiedenen Positionen verweilen, und/oder
das Stielelement während eines Drehens des Schwenkelements und eines Bewegens des Auslegerelements relativ zum Auslegerelement bewegt wird.

Fig. 1

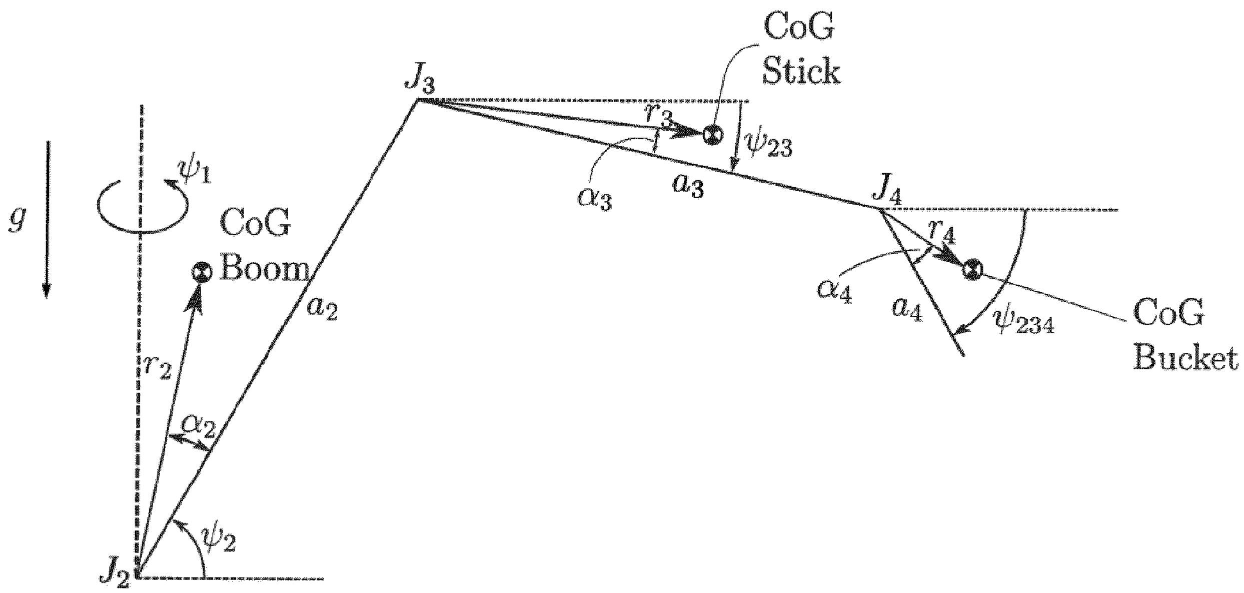
CoG
Stick
$J_3$
$r_3$
$\psi_{23}$
$\psi_1$
$\alpha_3$
$a_3$
$J_4$
$g$
CoG
Boom
$r_4$
$\alpha_4$
$a_4$
$\psi_{234}$
CoG
Bucket
$a_2$
$r_2$
$\alpha_2$
$\psi_2$
$J_2$

Fig. 2

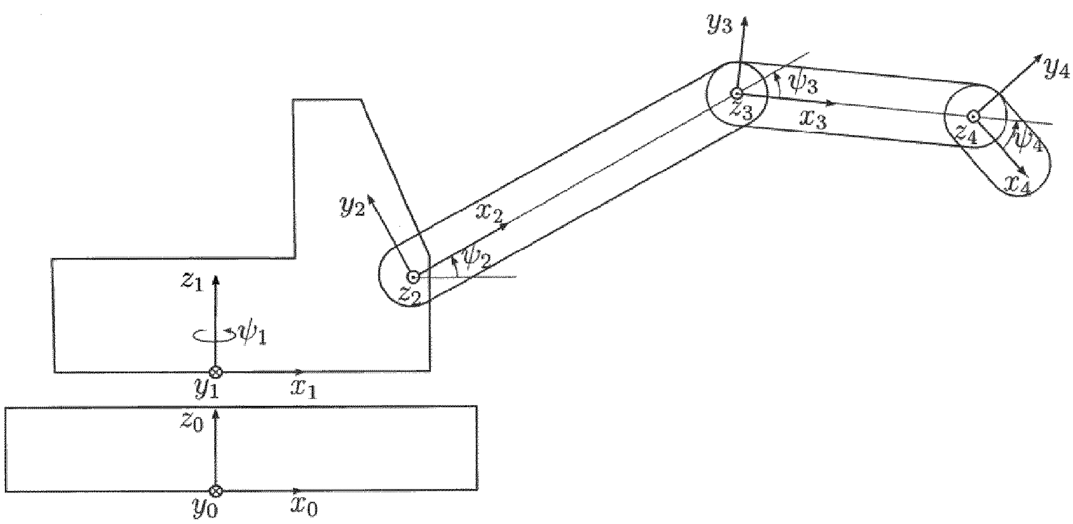
$y_3$
$\psi_3$
$y_4$
$z_3$
$x_3$
$z_4$
$\psi_4$
$x_4$
$y_2$
$x_2$
$\psi_2$
$z_2$
$z_1$
$\psi_1$
$y_1$
$x_1$
$z_0$
$y_0$
$x_0$

Fig. 3

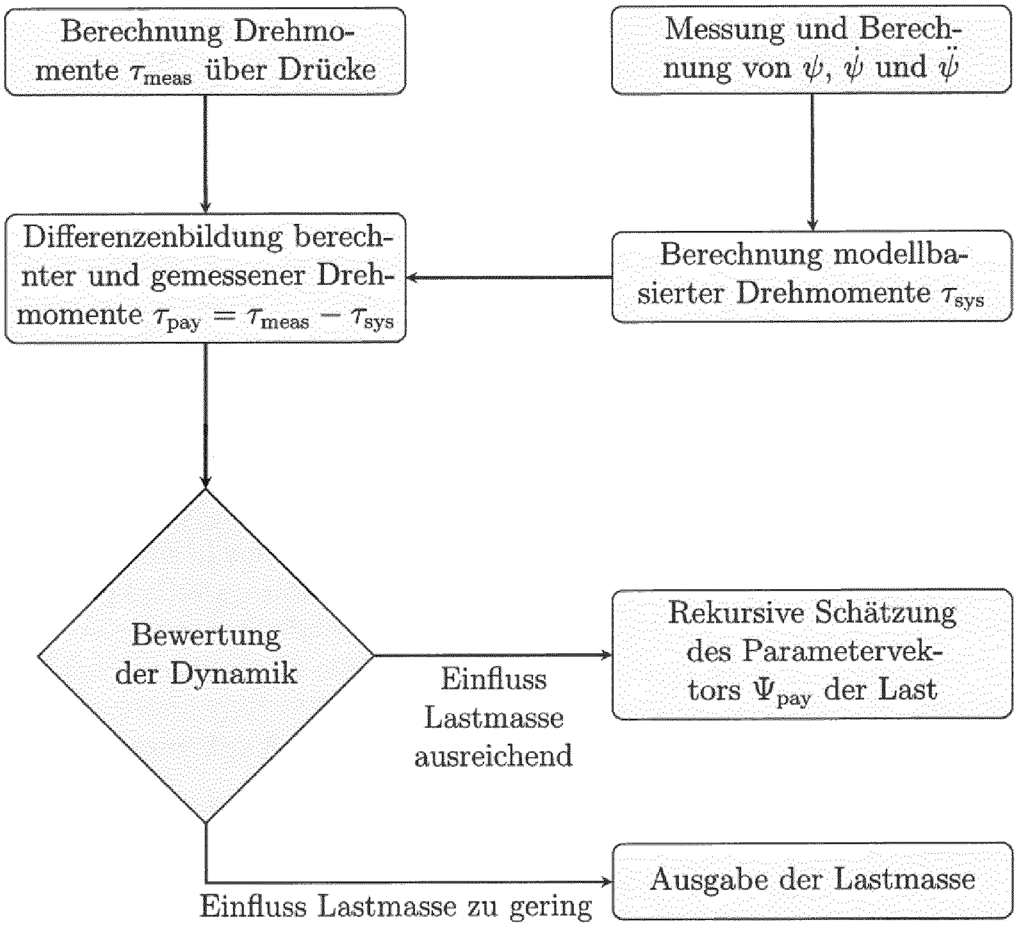
Berechnung Drehmomente $\tau_{meas}$ über Drücke
Messung und Berechnung von $\psi$, $\dot{\psi}$ und $\ddot{\psi}$
Differenzenbildung berechnter und gemessener Drehmomente $\tau_{pay} = \tau_{meas} - \tau_{sys}$
Berechnung modellbasierter Drehmomente $\tau_{sys}$
Bewertung der Dynamik
Einfluss Lastmasse ausreichend
Rekursive Schätzung des Parametervektors $\Psi_{pay}$ der Last
Einfluss Lastmasse zu gering
Ausgabe der Lastmasse

Fig. 4

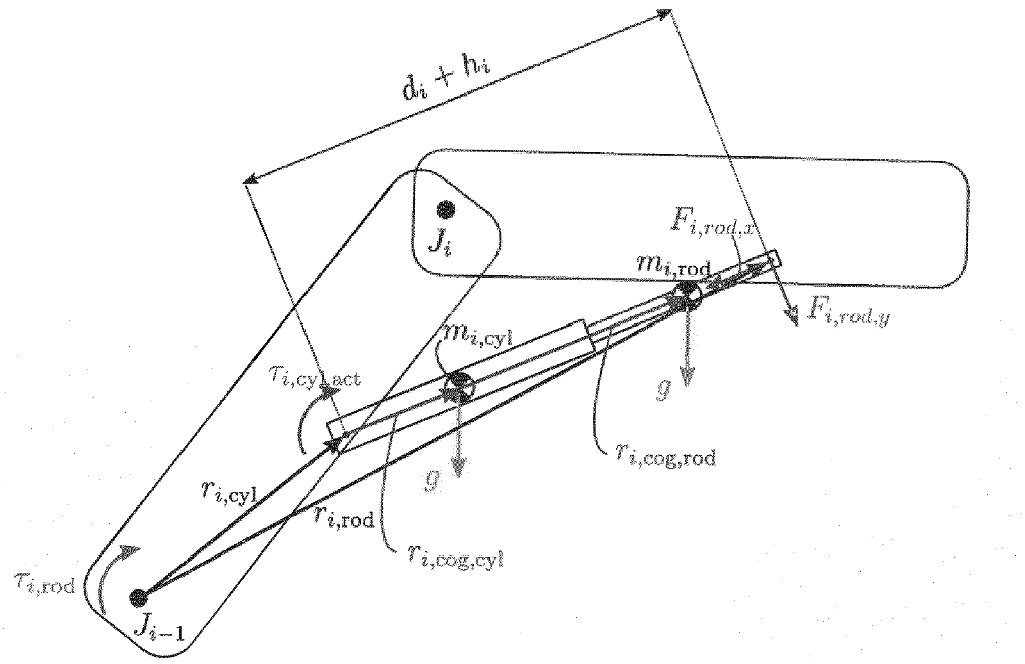
$d_i + h_i$
$J_i$
$F_{i,rod,x}$
$m_{i,rod}$
$F_{i,rod,y}$
$m_{i,cyl}$
$\tau_{i,cyl,act}$
$g$
$r_{i,cog,rod}$
$r_{i,cyl}$
$g$
$r_{i,rod}$
$r_{i,cog,cyl}$
$\tau_{i,rod}$
$J_{i-1}$

Fig. 5

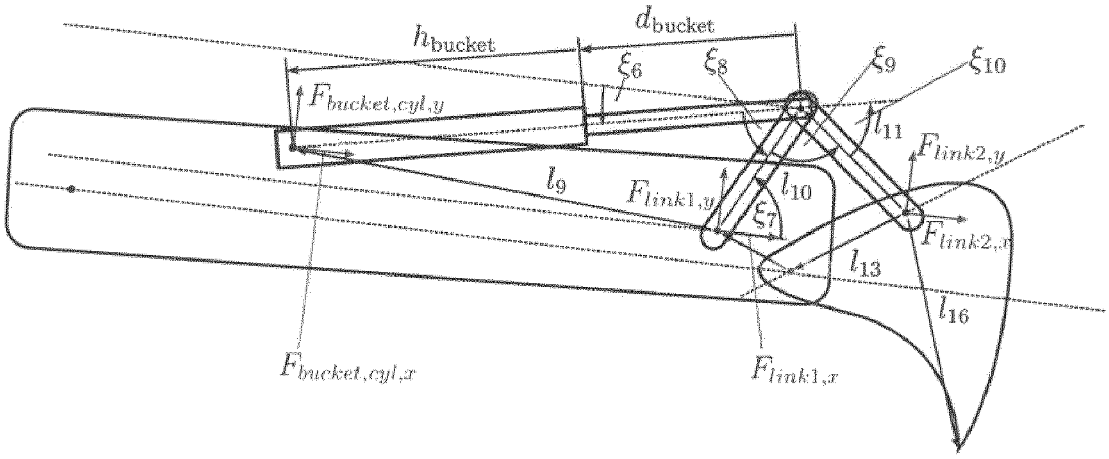
$h_{bucket}$
$d_{bucket}$
$\xi_6$
$\xi_8$
$\xi_9$
$\xi_{10}$
$F_{bucket,cyl,y}$
$l_{11}$
$F_{link2,y}$
$l_9$
$F_{link1,y}$
$l_{10}$
$\xi_7$
$F_{link2,x}$
$l_{13}$
$l_{16}$
$F_{bucket,cyl,x}$
$F_{link1,x}$

Europäisches Patentamt
European Patent Office
Office européen des brevets

## EUROPÄISCHER RECHERCHENBERICHT

Nummer der Anmeldung
EP 19 20 5370

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2014/107897 A1 (ZHU YONGLIANG [US] ET AL) 17. April 2014 (2014-04-17)<br>* Abbildungen 1,2,4 *<br>* Absatz [0014] *<br>* Absatz [0023] - Absatz [0025] *<br>* Absatz [0030] - Absatz [0033] *<br>* Absatz [0038] - Absatz [0040] *<br>* Absatz [0050] - Absatz [0058] *<br>* Absatz [0046] *<br>----- | 1-16 | INV.<br>B25J9/16<br>E02F3/43<br>G01G23/01 |
| A | TOMI MAKKONEN ET AL: "Automation of an Excavator Based on a 3D CAD Model and GPS Measurement",<br>PROCEEDINGS OF THE 20TH INTERNATIONAL SYMPOSIUM ON AUTOMATION AND ROBOTICS IN CONSTRUCTION ISARC 2003 -- THE FUTURE SITE,<br>25. September 2004 (2004-09-25),<br>XP055680557,<br>ISSN: 2413-5844, DOI: 10.22260/ISARC2004/0047<br>ISBN: 978-90-68-14574-8<br>* Seite 2 *<br>----- | 1-16 | |

| RECHERCHIERTE SACHGEBIETE (IPC) |
|---|
| B25J<br>G05B<br>E02F<br>G01G |

Der vorliegende Recherchenbericht wurde für alle Patentansprüche erstellt

2

| Recherchenort | Abschlußdatum der Recherche | Prüfer |
|---|---|---|
| Den Haag | 2. April 2020 | Antonopoulos, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 19 20 5370

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-04-2020

| Im Recherchenbericht angeführtes Patentdokument | Datum der Veröffentlichung | Mitglied(er) der Patentfamilie | Datum der Veröffentlichung |
|---|---|---|---|
| US 2014107897 A1 | 17-04-2014 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 7912612 B2
- US 8909437 B2
- US 8660758 B